# EUROPÄISCHE PATENTSCHRIFT

(11) **EP 3 147 584 B1**
(45) Veröffentlichungstag und Bekanntmachung des Hinweises auf die Patenterteilung: **02.05.2018**
(21) Anmeldenummer: 15187164.7
(22) Anmeldetag: 28.09.2015
(51) Int. Cl.: F24H 1/18, F28D 1/047, F28D 7/02, F28F 1/02, F28D 20/00

(54) **FLÜSSIGKEITSSPEICHER ZUR SPEICHERUNG VON KALTEN UND WARMEN FLÜSSIGKEITEN**
LIQUID STORAGE FOR STORAGE OF COLD AND WARM LIQUIDS
DISPOSITIF DE STOCKAGE DE LIQUIDE DESTINE A STOCKER DES LIQUIDES CHAUDS ET FROIDS

(43) Veröffentlichungstag der Anmeldung: 29.03.2017
(73) Patentinhaber: Kaymakanov, Gueorgui, 64673 Zwingenberg (DE)
(72) Erfinder: Kaymakanov, Gueorgui, 64673 Zwingenberg (DE)
(74) Vertreter: Blumbach · Zinngrebe Patent- und Rechtsanwälte

(56) Entgegenhaltungen:
- EP-A2- 1 840 482
- WO-A1-99/14542
- DE-A1-102008 049 954
- DE-U1- 29 800 262
- DE-U1-202011 050 315
- DE-U1-202011 100 985
- DE-U1-202013 005 096
- JP-A- S63 220 091

## Beschreibung

Die vorliegende Erfindung bezieht sich auf einen Flüssigkeitsspeicher zur Speicherung von kalten und warmen Flüssigkeiten gemäß dem Oberbegriff des Anspruchs 1. Ein solcher Flüssigkeitsspeicher ist z.B. aus der DE 20 2013 005 096 U1 bekannt. Flüssigkeitsspeicher, wie beispielsweise Puffer-, Brauchwasser-, Frischwasser- oder Trinkwasserspeicher, sind üblicherweise mit einer oder mit mehreren Isolierungsschichten zur Wärme- und/oder Kälteisolierung ummantelt und ermöglichen die Speicherung und Bevorratung von Kalt- oder Warmwasser sowie von anderen Flüssigkeiten in einem oder in mehreren Speicherbehältern.

Die meisten Speicherbehälter sind aus emailliertem oder nicht emailliertem Stahl, Edelstahl oder Kunststoff.

Darüber hinaus sind in den Speicherbehältern derartiger Flüssigkeitsspeicher, welche vorzugsweise zylindrisch ausgebildet sind, oftmals auch rohrförmige Wärmetauscher eingebaut, welche die in den Speicherbehältern zu speichernde Flüssigkeit durch eine im Wärmetauscher geführte Flüssigkeit beheizen bzw. kühlen, die zuvor in einer Heiz- oder Kühlanlage erwärmt bzw. gekühlt worden ist. Diese Wärmetauscher übergeben somit wiederum Ihre Oberflächentemperatur an die in den Speicherbehälter gefüllte Flüssigkeit. Das heißt, Wärmeenergie (Thermische Energie) wird entweder in die in dem Speicherbehälter befindliche Flüssigkeit transportiert oder wird dieser entzogen.

Die Wärmetauscher können ferner aus emaillierten oder nicht emaillierten Stahl, Kupfer oder Edelstahlrohren gefertigt sein, wobei aus dem Stand der Technik rohrförmige Wärmetauscher mit rundem Querschnitt grundsätzlich bekannt sind.

Während der Speicherungsdauer der Flüssigkeit in dem Speicherbehälter des Flüssigkeitsspeichers entstehen jedoch Temperaturverluste, deren Ursache in der Beschaffenheit der Speicherbehälter und seiner Isolierung zu suchen ist. Außerdem gibt es Unterschiede bei der Schnelligkeit der Temperaturabgabe oder -Aufnahme der Wärmetauscher an die bzw. von der zu erwärmende(n) bzw. kühlende(n) Flüssigkeit. Ein gattungsbildender Wärmetauscher ist beispielsweise aus der WO 99/14542 A1 bekannt.

Aufgaben dieser Erfindung sind daher insbesondere die Minimierung der Kälte- bzw. Wärmeverluste von Flüssigkeitsspeichern der vorbenannten Art, die Steigerung der Effizienz von gegebenenfalls im Innern eines Speicherbehälters eingebauten Wärmetauschern bzw. des Wärmeaustauschs und die Steigerung der Flexibilität bei der Herstellung sowie die Erweiterung der Einsatzmöglichkeiten von Flüssigkeitsspeichern. Die Lösung der Erfindung ist durch einen Flüssigkeitsspeicher gemäß Anspruch 1 wiedergegeben.

Ein erfindungsgemäßer Flüssigkeitsspeicher umfasst wenigstens einen ersten Speicherbehälter zur Speicherung einer warmen oder einer kalten Flüssigkeit.

Sofern der Speicherbehälter des Flüssigkeitsspeichers mit der in dem Speicherbehälter zu speichernden Flüssigkeit durchflossen wird, kann dieser auch wenigstens einen Zulauf und einen Ablauf aufweisen, nachfolgend jeweils als Zu-/Ablauf bezeichnet.

In den ersten Speicherbehälter eines erfindungsgemäßen Flüssigkeitsspeichers ist wenigstens ein erster rohrförmiger Wärmetauscher eingebracht, welcher ein längliches Querschnittsprofil, insbesondere ein ovales oder elliptisches Querschnittsprofil, aufweist.

Unter einem rohrförmigen Wärmetauscher ist im einfachsten Fall eine Rohrleitung, das heißt ein Rohr mit einer bestimmten Dicke zu verstehen. Der rohrförmige Wärmetauscher ist zur Wärmeübertragung an die Flüssigkeit in dem Speicherbehälter in diesen eingebracht und weist üblicherweise zumindest einen Zu- sowie einen Ablauf auf, welcher jeweils aus dem Speicherbehälter herausgeführt und mit einer Wärme- oder Kältequelle, das heißt einer Wärmesenke verbunden ist. Nachfolgend werden ein Zu- und ein Ablauf eines rohrförmigen Wärmetauschers ebenfalls als Zu-/Ablauf bezeichnet.

Eine Längsachse eines länglichen Querschnittsprofils entspricht der Profilsehne bzw. der Profiltiefe und damit der größten Länge des Querschnittsprofils. Diese Längsachse des wenigstens eines Wärmetauschers ist in einem Neigungswinkel zwischen 1° und 359°, insbesondere in einem Neigungswinkel zwischen +/-30° und +/-60°, zur Horizontalen ausgerichtet.

Durch den erfindungsgemäßen Flüssigkeitsspeicher zur Speicherung von kalten und warmen Flüssigkeiten ergibt sich somit eine Vielzahl von Vorteilen.

Durch den Einsatz und/oder einer außergewöhnlichen Positionierung von wenigstens einem Wärmetauscher mit einem folglich geneigten länglichen Querschnittsprofil, insbesondere mit einem ovalen und/oder elliptischen Querschnittsprofil, insbesondere von helixförmig gewendelten Glattrohrwärmetauschen, kann die Effizienz von Flüssigkeitsspeichern bis zu 25% und darüber hinaus gesteigert werden.

In einer weiteren vorteilhaften Ausführungsform eines erfindungsgemäßen Flüssigkeitsspeichers ist der Neigungswinkel wenigstens eines zweiten und/oder dritten rohrförmigen Wärmetauschers kleiner, größer oder gleich dem Neigungswinkel des ersten und/oder zweiten Wärmetauschers. In einer besonders zweckmäßigen alternativen oder ergänzenden Ausführungsform eines erfindungsgemäßen Flüssigkeitsspeichers kann der zweite oder der dritte rohrförmige Wärmetauscher ein kreisförmiges Querschnittsprofil aufweisen und/oder wenigstens einer der rohrförmigen Wärmetauscher aus einem Wellrohr oder einem Glattrohr geformt sein. Bevorzugt ermöglicht die Ausstattung mit einer Kombination von Isolierungsschichten ferner eine Minimierung der Kälte- bzw. Wärmeverluste von Flüssigkeitsspeichern. Dies trifft sowohl bei Flüssigkeitsspeichern der zuvor benannten Art, jedoch auch bei Flüssigkeitsspeichern ohne einen rohrförmigen Wärmetauscher mit einem länglichen Querschnittsprofil oder mit Wärmetauschern der herkömmlichen Art zu.

Ein vorteilhaft isolierter Flüssigkeitsspeicher weist eine Isolierung auf, die wenigstens eine erste Isolierungsschicht umfasst, die an der Außenseite des Speicherbehälters fixiert, insbesondere angeklebt ist, sowie wenigstens eine zweite Isolierungsschicht, die an einer dritten Isolierungsschicht, welche insbesondere eine Vakuumtaschenisolierung ist, fixiert, insbesondere angeklebt ist. Besonders vorteilhaft ist bei einem derartigen Flüssigkeitsspeicher die zweite Isolierungsschicht zur ersten Isolierungsschicht hin orientiert, wobei die zweite und die dritte Isolierungsschicht den Speicherbehälter wenigstens teilweise umgeben.

Somit kann eine weitere Steigerung der Effizienz des Flüssigkeitsspeichers als auch der Effizienz des Wärmeaustauschs erreicht werden. Dies trifft insbesondere bei im Innern eines Speicherbehälters eingebauten rohrförmigen Wärmetauschern mit einem geneigten länglichen Querschnittsprofil zu. Ferner kann die Steigerung der Flexibilität bei der Herstellung sowie die Erweiterung der Einsatzmöglichkeiten von Flüssigkeitsspeichern erreicht werden.

Besondere Vorteile eines mit einer Kombination von Isolierungsschichten ausgestatten Flüssigkeitsspeichers können insbesondere erreicht werden, wenn die Isolierung wenigstens teilweise, insbesondere seitlich abnehmbar ist.

Weitere Vorteile der Erfindung werden aus der nachfolgenden beispielhaften Beschreibung bevorzugter Ausführungsformen unter Bezugnahme auf die beigefügten Figuren dargestellt. Die Figuren zeigen:
- Fign. 1 bis 2: verschiedene Darstellungen der Strömungsverhältnisse in Flüssigkeitsspeichern mit einem rohrförmigen Wärmetauscher mit geneigtem länglichem Querschnittsprofil,
- Fign. 3 bis 4: verschiedene Ausführungsformen von Flüssigkeitsspeichern mit unterschiedlichen rohrförmigen Wärmetauschern mit geneigten länglichen Querschnittsprofilen,
- Fig. 5: eine Ausführungsform eines Flüssigkeitsspeichers mit einem einzigen, jedoch mehrfach gewundenen rohrförmigen Wärmetauscher mit geneigten länglichen Querschnittsprofilen,
- Fign. 6 bis 8: verschiedene Ausführungsformen von Flüssigkeitsspeichern mit unterschiedlichen rohrförmigen Wärmetauschern, welche teilweise ein geneigtes längliches Querschnittsprofil aufweisen,
- Fig. 9: eine Ausführungsform eines als Kombinationsspeicher ausgebildeten Flüssigkeitsspeichers mit z.B. zwei rohrförmigen Wärmetauschern mit geneigten länglichen Querschnittsprofilen,
- Fig. 10: eine Seitenansicht einer Ausführungsform eines Flüssigkeitsspeichers mit einer nicht abnehmbaren Kombination von Isolierungsschichten ohne Wärmetauscher, und
- Fign. 11 und 12: eine Seitenansicht und eine Querschnitts-Draufsicht einer Ausführungsform eines Flüssigkeitsspeichers mit einer seitlich abnehmbaren Kombination von Isolierungsschichten ohne Wärmetauscher.

Es sei darauf hingewiesen, dass in der nachfolgenden Beschreibung gleich bezeichnete Komponenten in den Figuren mit denselben Bezugszeichen belegt sind.

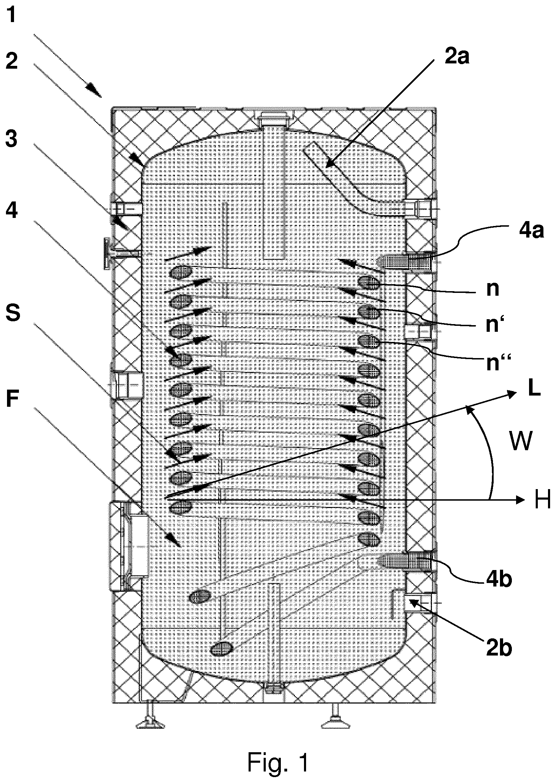

Die Figuren 1 bis 12 zeigen jeweils beispielhafte Ausführungsformen von erfindungsgemäßen Flüssigkeitsspeichern 1 mit einem zylindrischen ersten Speicherbehälter 2 zur Speicherung von Kalt- oder Warmwasser oder von anderen Flüssigkeiten. Gemäß der Erfindung kann ein erster Speicherbehälter 2 grundsätzlich eine beliebige geometrische Form aufweisen, ist in der Regel jedoch im Wesentlichen zylinderförmig.

Diese Flüssigkeitsspeicher 1 können ferner, je nach Einsatzzweck zweckmäßig Speicherbehälter 2 aufweisen, die von innen emailliert oder auch von innen nicht emailliert sind.

Flüssigkeitsspeicher mit von innen nicht emaillierten Speicherbehältern 2 eignen sich insbesondere als Pufferspeicher für Kältemaschinen, elektrische Beheizung, Blockheizkraftwerke (BHKW), Wärmepumpen, Heizkessel, Pellet- und Festbrennstoffkessel, wasserführende Kaminöfen, Solar- oder Heizungsanlagen und für weitere Kreisläufe, beispielsweise zur Kühlung oder zur Heizungserwärmung mit speziell positionierten, ovalen oder elliptischen Glattrohrwärmetauschern.

Flüssigkeitsspeicher mit von innen emaillierten Speicherbehältern 2 eignen sich insbesondere für Kältemaschinen, elektrische Beheizung, BHKW, Wärmepumpen, Heizkessel, Pellet- und Festbrennstoffkessel, wasserführende Kaminöfen, sowie für Solar- oder Heizungsanlagen und für weiter Kreisläufe, beispielsweise zur Kühlung oder Erwärmung von Trinkwasser oder anderen Flüssigkeiten mit speziell positionierten, ovalen oder elliptischen Glattrohrwärmetauschern.

Ferner weisen alle Speicherbehälter 2 der Figuren 1 bis 12 zweckmäßig eine Isolierung 3 sowie zweckmäßig jeweils mindestens zwei Zu-/Ablauf-Stellen 2a, 2b zur Zufuhr sowie zur Entnahme der kalten oder warmen Flüssigkeit auf, wobei eine Isolierung nicht zwingend erforderlich ist.

Darüber hinaus sei darauf hingewiesen, dass anstelle der in den Figuren 1 bis 9 der Einfachheit halber grundsätzlich als Glattrohrwärmetauscher dargestellten Wärmetauscher auch als Wellrohrwärmetauscher ausgebildete Wärmetauscher im Rahmen der Erfindung zur Anwendung kommen können.

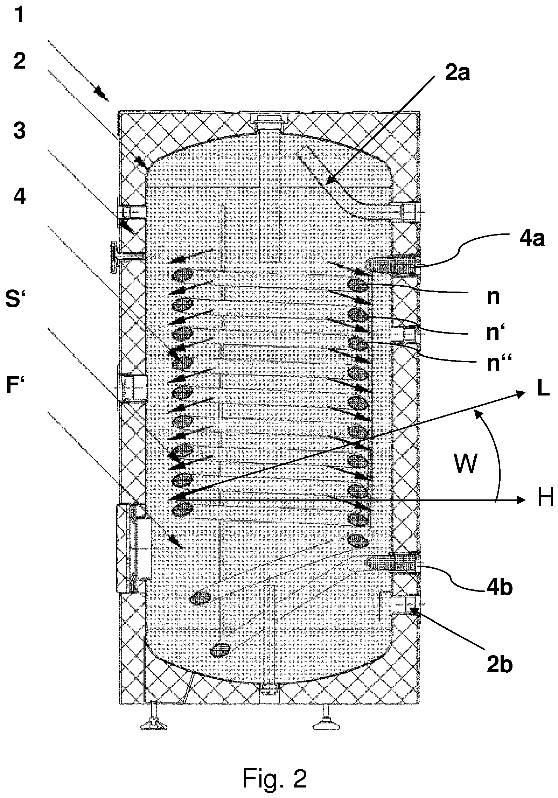

Die Figuren 1 und 2 zeigen anhand einer Querschnittsansicht durch jeweils ein- und denselben Flüssigkeitsspeicher 1 unterschiedliche Darstellungen der Strömungsverhältnisse S, S' in beispielhaften Ausführungsformen eines erfindungsgemäßen Flüssigkeitsspeichers 1. Ein solcher kann beispielsweise als Brauchwasserspeicher eingesetzt werden.

Der Flüssigkeitsspeicher 1 gemäß Figuren 1 und 2 weist einen ersten Speicherbehälter 2 auf, in welchen ein einziger rohrförmiger Wärmetauscher 4 eingebracht ist. Der rohrförmige Wärmetauscher 4 gemäß der Figuren 1 und 2 weist einen ersten Zu-/Ablauf 4a und einen zweiten Zu-/Ablauf 4b auf, welche jeweils durch die Wandung des Speicherbehälters 2 und durch die Isolation 3 nach außen geführt sind und dort beispielsweise an eine Heiz- oder Kühlanlage angeschlossen werden können.

Der rohrförmige Wärmetauscher 4 ist zweckmäßig ferner zumindest im oberen Bereich des Speicherbehälters 2, im Wesentlichen um die Hochachse des Speicherbehälters 2, helixförmig mit mehreren Windungen, in diesem Fall mit 11 Windungen n, n', n", ausgebildet. Der Übersichtlichkeit halber sind nur drei Windungen n, n', n" mit Bezugszeichen versehen.

Die Anzahl der Windungen kann dabei z.B. abhängig von dem Literinhalt eines Flüssigkeitsspeichers und/oder davon sein, wie die Energie in diesen eingebracht wird. Ein Flüssigkeitsspeicher kann beispielsweise mit einem oder mehreren rohrförmigen Wärmetauscher ausgestattet sein. Jeder Wärmetauscherer kann zum Beispiel 2 bis 3 oder auch bis zu 50 bis 60 und mehr Windungen besitzen. Ferner sind die Zu- und Abläufe beliebig variabel.

Insbesondere zeigen die Figuren 1 bis 2 ferner verschiedene Darstellungen der Strömungsverhältnisse in Flüssigkeitsspeichern mit einem rohrförmigen Wärmetauscher mit geneigtem länglichem Querschnittsprofil.

So weist der in dem ersten Speicherbehälter 2 gemäß Fign. 1 und 2 eingebaute rohrförmige Wärmetauscher 4 ein längliches Querschnittsprofil in Gestalt eines ovalen oder elliptischen Profils eines Glattrohrwärmetauschers auf, wobei erfindungsgemäß alle Arten von Wärmetauscheroberflächen zur Anwendung kommen können, das heißt eine beliebige äußere Oberfläche aufweisen können, beispielsweise auch von Wellrohrwärmetauschern mit einem länglichen Querschnittsprofil, welche entlang der Rohrleitung einen wellenförmig wechselnden Durchmesser aufweisen.

Die Längsachsen L des länglichen Querschnittsprofils des Wärmetauschers 4 der Flüssigkeitsspeicher 1 gemäß der Figuren 1 und 2 sind ferner in einem Neigungswinkel W ausgerichtet. Erfindungsgemäß kann dieser Neigungswinkel zwischen 1° und 359° zur Horizontalen H betragen, besonders vorteilhaft ist dieser Neigungswinkel W jedoch in einem Bereich zwischen +/-30° und +/-60° zur Horizontalen H ausgerichtet.

Gemäß der Figuren 1 und 2 sind zweckmäßig ferner die Längsachsen der Querschnittsprofile aller Windungen n, n', n" usw. mit einem Neigungswinkel von 1 bis 359 Grad zu dem als Basis angenommenen Ausgangspunkt der Horizontalen von 0 Grad positioniert. Das heißt, der Neigungswinkel W ist entlang des helixförmig gewendelten rohrförmigen Wärmetauschers 4 im Wesentlichen überall konstant.

Fig. 1 zeigt die im Betrieb des erfindungsgemäßen Flüssigkeitsspeichers 1 auftretenden Strömungsverhältnisse, beispielsweise bei einer Temperaturabgabe des heißen Wärmetauschers 4 an die in den Speicherbehälter gefüllte, kühlere Flüssigkeit F, so dass eine natürliche kalt-warm Flüssigkeits-Thermodynamik ausgebildet wird.

Demnach kommt es zur Bildung einer aufsteigenden Flüssigkeitsströmung S (Aufwärts-Bewegung). Die Wärme bzw. die erwärmte Flüssigkeit F steigt nach oben und die kühlere oder gekühlte Flüssigkeit sinkt nach unten.

Bei einem Erwärmungsprozess mittels eines herkömmlichen Wärmetauschers, welcher ein kreisförmiges Querschnittsprofil ausbildet, entsteht ein geringer, aber dennoch ausschlaggebender Widerstand zwischen der kühleren Flüssigkeit und der durch den Wärmetauscher erwärmten Flüssigkeit. Die kalte Flüssigkeit, welche sich in einem geringen Abstand zwischen der Wand des Speicherbehälters und dem Wärmetauscher befindet, versucht dabei nach unten zu sinken, während gleichzeitig die durch den Wärmetauscher erwärmte Flüssigkeit in einer Strömung nach oben zu steigen versucht. Dies verlangsamt den Temperaturaustausch wesentlich.

Bei einem Kühlungsprozess durch einen kühlenden Wärmetauscher mit einer wärmeren Flüssigkeit im Speicherbehälter, ist der Verlauf des obengenannten Vorgangs und einer abwärtsgerichteten Strömung entsprechend umgekehrt (vgl. auch Fig. 2).

Wie nachfolgend beschrieben, sind gemäß der Erfindung jedoch ein schnellerer Temperaturaustausch und eine gezielte Leitung der aufbereiteten Flüssigkeit gewährleistet.

Es sei an dieser Stelle auch darauf hingewiesen, dass je nach Anwendung, das heißt ob beispielsweise der Flüssigkeitsspeicher als Wärme- oder als Kältespeicher oder als Puffer- oder Brauchwasserspeicher ausgebildet ist, eine Entnahmestelle, das heißt eine Ablaufstelle, entweder im oberen oder im unteren Bereich des Speicherbehälters angeordnet sein kann.

Beispielsweise befindet sich bei einem Warmwasser-Brauchwasserspeicher eine Ablaufstelle in der Regel im oberen Bereich des Speicherbehälters 2, das heißt im "Zu-/Ablauf 2a", während sich die Zulaufstelle im "Zu-/Ablauf 2b" im unteren Bereich befindet. Umgekehrt, ist die Ablaufstelle bei einem Kaltwasser-Brauchwasserspeicher in der Regel im "Zu-/Ablauf 2b" im unteren Bereich des Speicherbehälters angeordnet, während sich die Zulaufstelle im "Zu-/Ablauf 2a" im oberen Bereich befindet.

Ferner wird beispielweise ein Brauch- oder Trinkwasserspeicher durch ein oder mehrere Wärmetauscher erwärmt. Die erwärmte Flüssigkeit F wird von "Zu-/Ablauf 2a" z.B. zu einer Dusche usw. gebracht und gleichzeitig kommt über den "Zu-/Ablauf 2b" das Leitungswasser rein.

Darüber hinaus hat ein als Pufferspeicher ausgebildeter Flüssigkeitsspeicher in der Regel viel mehr Zu und Ablaufstellen als ein Warmwasser-, Trinkwasser- oder Brauchwasserspeicher. Bei beiden Speicherarten wird die Flüssigkeit F jedoch üblicherweise durch einen innen eingebauten Wärmetauscher gekühlt oder erwärmt.

In der Regel ist ein Warmwasser- Trinkwasser-Brauchwasserspeicher von innen beschichtet, zum Beispiel emailliert, oder aus Edelstahl gebaut, da er für sauberes Wasser oder andere rein zu haltende Flüssigkeiten, z.B. Milch usw., gebraucht wird. Auch für Korrosion verursachende Flüssigkeiten kann zweckmäßig eine Innenbeschichtung oder Edelstahl eingesetzt werden.

Ein Pufferspeicher ist in der Regel hingegen von innen nicht beschichtet. In seinem Inneren befindet sich beispielsweise Heizungswasser, oder eine andere Flüssigkeit, die nicht hygienisch rein zu halten ist und z.B. auch sauerstoffarm sein kann, oder andere Flüssigkeiten, die die innere nicht beschichtete Oberfläche der Pufferspeicher nicht angreifen und hierdurch z.B. Rost verursachen würden. In der Regel hat dieser mehrere Zu und Abläufe, da er mehrere Kreisläufe bedienen muss, z.B. Heizkörperkreisläufe, Bodenheizungen oder andere nicht mit einer Hausheizung verbundene Stellen.

Darüber hinaus ist es im Rahmen der Erfindung auch möglich, dass ein Flüssigkeitsspeicher einen Speicherbehälter aufweist, der keine ersten und zweiten "Zu-/Abläufe 2a und 2b" zur Zufuhr und zur Entnahme von kalter oder warmer Flüssigkeit aufweist, beispielsweise bei einem Flüssigkeitsspeicher mit einer im Betrieb stehenden Flüssigkeit F, welcher Wärmeenergie lediglich über Wärmetauscher zugeführt und auch wieder entzogen wird.

Der Einsatz des neu entwickelten Wärmetauschers 4 mit einem länglichen Querschnittsprofil, insbesondere eines ovalen oder elliptischen Glattrohrwärmetauschers, in einem Speicherbehälter eines Flüssigkeitsspeichers 1 und darüber hinaus auch insbesondere dessen außergewöhnliche Positionierung sowie des Neigungswinkels W der Windungen des Wärmetauschers führen zu einer Ersparnis von Energieressourcen und zur Minimierung der Energieverluste.

Durch die Form und Anordnung des mehrere Windungen n, n', n" aufweisenden Wärmetauschers mit dessen länglichen, insbesondere ovalen oder elliptischen Querschnittprofil und dessen Neigungswinkel W (wahlweise im Bereich von 1 bis 359 Grad), also insbesondere der Positionierung des Wärmetauschers mit geneigtem länglichem Querschnittsprofil und der gezielten Ausrichtung der Längsachse L dieses länglichen Querschnittsprofils in einem zweckmäßigen Neigungswinkel W zur Horizontalen (H), wird eine Flüssigkeiten-Strömung S, S' erzeugt, die eine vorteilhafte Flüssigkeits-Thermodynamik mit sich bringt. Wärme bzw. eine erwärmte Flüssigkeit, kann insbesondere gerichtet, im Wesentlichen ungehindert nach oben steigen (vgl. Fig. 1) und kalte bzw. gekühlte Flüssigkeit kann, insbesondere gerichtet, im Wesentlichen ungehindert nach unten sinken (vgl. Fig. 2). Somit werden die geneigten Windungen des Wärmetauschers 4 widerstandslos von den in den Speicherbehälter 2 eingefüllten Flüssigkeiten F umspült.

Somit geschieht die Temperaturabgabe des Wärmetauschers an die Flüssigkeit deutlich schneller und darum arbeiten die Wärmetauscher wesentlich effektiver und energieeffizienter.

Zudem wird eine bessere, das heißt eine gezielte Leitung der erzeugten Flüssigkeitsströmungen (bei der Temperaturabgabe bzw. -aufnahme aus dem bzw. an den Wärmetauscher an die bzw. aus den umgebenden kalten oder warmen Flüssigkeiten) nach unten beziehungsweise nach oben in den Speicherbehälter erzeugt. Folglich steht beispielsweise bei den Ausführungsformen gemäß Figur 1 und 2 die aufbereitete Flüssigkeit schneller an den Flüssigkeits-Entnahmestellen, das heißt dem jeweiligen Zu-/Ablauf 2a, 2b zur Verfügung.

Figur 1 zeigt infolgedessen die natürlich entstandene und gezielt in die gewünschte Richtung gelenkte bzw. gerichtete Flüssigkeitsströmung S bei einem Flüssigkeitsspeicher 1, bei welchem sich im Speicherbehälter 2 eine kühlere Flüssigkeit F befindet, die durch die Temperaturabgabe aus dem heißen Wärmetauscher 4 erwärmt wird. Wie zu sehen, ist die erfindungsgemäß bewirkte Flüssigkeitsströmung S in das Zentrum des Speicherbehälters 2, insbesondere auf den Zu-/Ablauf 2a, gerichtet.

Umgekehrt zeigt Figur 2 eine entsprechende, gezielt in die gewünschte Richtung gelenkte Flüssigkeitsströmung S' bei einem Flüssigkeitsspeicher 1, bei welchem sich im Speicherbehälter 2 eine warme Flüssigkeit F' befindet, die durch die Temperaturabgabe aus dem kalten Wärmetauscher 4 gekühlt wird. Wie zu sehen, ist die hierbei erfindungsgemäß bewirkte Flüssigkeitsströmung S' nach unten gerichtet, aus dem Zentrum des Speicherbehälters 2 heraus, insbesondere auf die zylindrische Innenfläche des Speicherbehälters 2, gerichtet. Die äußeren Schichten der Flüssigkeit F' in dem Flüssigkeitsspeicher weisen folglich ein geringeres Temperaturniveau auf.

Der Wärmetauscher 4 gemäß Figuren 1 und 2 kann folglich Teil eines Versorgerkreislaufs bilden.

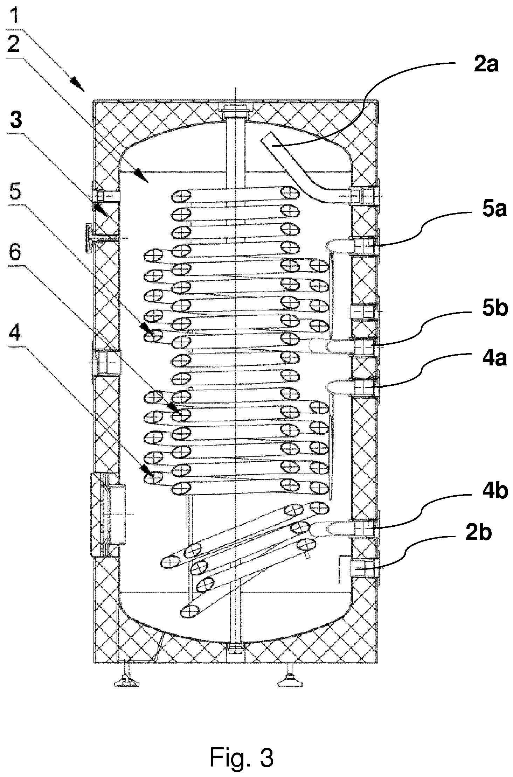

Die Figuren 3 bis 5 zeigen beispielhafte Ausführungsformen von Flüssigkeitsspeichern 1 mit unterschiedlichen rohrförmigen Wärmetauschern mit geneigten länglichen Querschnittsprofilen bzw. mit einem einzigen, jedoch mehrfach gewunden Wärmetauscher mit geneigten länglichen Querschnittsprofilen gemäß der Erfindung. Hierbei sind zweckmäßige Positionierungen und Neigungswinkel W (wahlweise von 1 bis 359 Grad) der länglichen Querschnittsprofile von Wärmetauschern in dem ersten Speicherbehälter 2 zu sehen, wobei als Wärmetauscher zweckmäßig Ausführungen von Glattrohrwärmetauschern mit geneigten länglichen Querschnittsprofilen zur Anwendung kommen.

Zweckmäßig können diese rohrförmigen Wärmetauscher mit geneigten länglichen Querschnittsprofilen zum Anschließen an einen Versorgungskreislauf des Flüssigkeitsspeichers 1 bestimmt sein, das heißt, es erfolgt ein Anschluss an eine Wärme- oder eine Kältequelle zur Versorgung des Flüssigkeitsspeichers mit Wärme oder Kälte. Es sei jedoch darauf hingewiesen, dass es auch im Rahmen der Erfindung liegt, dass rohrförmige Wärmetauscher mit geneigtem länglichen Querschnittsprofil grundsätzlich auch an einen Nutz- oder Entnahmekreislauf anschließbar sind, so dass über das in dem Wärmetauscher geführte Medium Wärme oder Kälte aus dem Flüssigkeitsspeicher für eine weitere Nutzung entnommen wird.

Im Detail, zeigt Figur 3 eine Ausführungsform eines Flüssigkeitsspeichers 1 mit drei rohrförmigen, in praktischer Weise helixförmig gewendelten Wärmetauschern 4, 5 und 6 mit jeweils geneigtem länglichem Querschnittsprofil. Der Flüssigkeitsspeicher 1 kann beispielsweise zweckmäßig als Brauchwasserspeicher zur Entnahme von warmer bzw. kalter Flüssigkeit am ersten Zu-Ablauf 2a bzw. Zu-Ablauf 2b betrieben werden.

In diesem Fall ist z.B. ein erster rohrförmiger Wärmetauscher 4 mit geneigtem länglichen Querschnittsprofil, beispielsweise zum Anschluss an eine Solarheizung, in der unteren Hälfte des Speicherbehälters 2 angeordnet und weist einen ersten Zu-/Ablauf 4a und einen zweiten Zu-/Ablauf 4b für ein Wärmeträgermedium auf.

Ein zweiter rohrförmiger Wärmetauscher 5 mit geneigtem länglichen Querschnittsprofil, beispielsweise zum Anschluss an eine Brennstoffheizung, kann dann z.B. in der oberen Hälfte des Speicherbehälters 2 angeordnet sein und weist gleichermaßen einen ersten Zu-/Ablauf 5a und einen zweiten Zu-/Ablauf 5b für ein weiteres Wärmeträgermedium auf.

Ein großer, innerer, dritter rohrförmiger Wärmetauscher 6 mit geneigtem länglichen Querschnittsprofil, welcher beispielsweise im Winter von einer Wärmepumpe versorgt werden kann und/oder im Sommer zur Erzeugung von gekühlter Flüssigkeit von einer Kältequelle versorgt werden kann, ist im Wesentlichen koaxial in den ersten und den zweiten Wärmetauscher 4, 5 eingebracht und weist einen ersten Zu-/Ablauf und einen zweiten Zu-/Ablauf auf (nicht in Figur 3 gezeigt).

Basierend auf der Beschreibung in Bezug auf die Figuren 1 und 2 richten die in Figur 3 gezeigten rohrförmigen Wärmetauscher 4, 5 und 6 eine auf- oder absteigende Strömung der Flüssigkeit in dem Speicherbehälter 2 grundsätzlich wiederum erfindungsgemäß jeweils in das bzw. aus dem Zentrum des Speicherbehälters 2.

Ferner kann, insbesondere durch eine wie bei Fig. 3 zu sehende zweckmäßige Anordnung der Wärmetauscher 4 und 5 sowie des inneren Wärmetauschers 6 zueinander, eine über dem ersten und/oder dem zweiten rohrförmigen Wärmetauscher 4, 5 aufsteigende Strömung einer in dem Speicherbehälter erwärmten Flüssigkeit zunächst derart auf den dritten rohrförmigen Wärmetauscher 6 und insgesamt die erwärmte Flüssigkeits-Strömung gezielt ins Zentrum des Speicherbehälters gerichtet werden, dass somit dieser innere Wärmetauscher 6 von der warmen Flüssigkeit S gezielt umspült wird und die erwärmte Flüssigkeit gezielt und im Wesentlichen ungehindert ins Zentrum des Speicherbehälters geleitet werden.

Umgekehrt würde gemäß Anordnung nach Fig. 3 eine über den einzelnen Windungen des dritten rohrförmigen Wärmetauschers 6 absteigende Kalt-Strömung einer in dem Speicherbehälter 2 abgekühlten Flüssigkeit F im Wesentlichen ungehindert aus dem Zentrum des Speicherbehälters 2 nach unten gerichtet (z.B. wenn dieser Wärmetauscher 6 im Sommer zur Erzeugung von gekühlter Flüssigkeit von einer Kältequelle versorgt wird).

Ein solches Umspülen eines Wärmetauschers von einer auf- oder auch absteigenden Flüssigkeitsströmung, die von einem anderen Wärmetauscher hervorgerufen wird, kann z.B. durch leichten vertikalen Versatz der Windungen dieser Wärmetauscher zueinander und/oder der Ausrichtung der Neigungswinkel eingestellt werden.

Es sei darauf hingewiesen, dass die Figuren 3, 4 und 5 bevorzugte Ausführungsformen von Flüssigkeitsbehältern mit unterschiedlichen geneigten Wärmetauschern zeigen, die insbesondere von verschiedenen Wärme-/Kälte-Energieträgern entweder gekühlt oder erwärmt werden können.

Allerdings hat sich ein Umspülen eines Wärmetauschers von einer auf- oder auch absteigenden Flüssigkeitsströmung, die von einem anderen Wärmetauscher hervorgerufen wird, auch für den Fall als zweckmäßig gezeigt, sollte der umspülte Wärmetauscher anstelle an einen Versorgungskreislauf an einen Nutz- oder Entnahmekreislauf angeschlossen sein, da hierdurch auch ein Wärmeübergang zwischen Flüssigkeit und umspülten Wärmetauscher wesentlich verbessert werden kann.

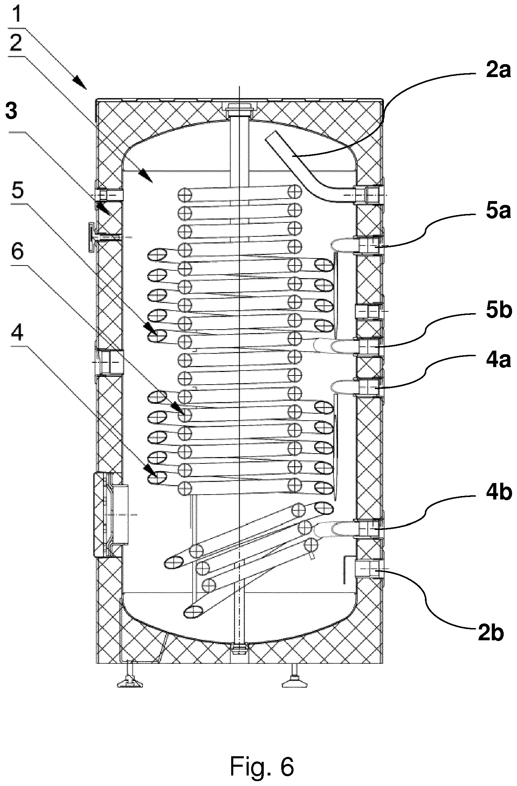

Hierfür besonders bevorzugte Ausführungsformen von Flüssigkeitsbehälter sind jedoch vornehmlich Gegenstand der Figuren 6 bis 8.

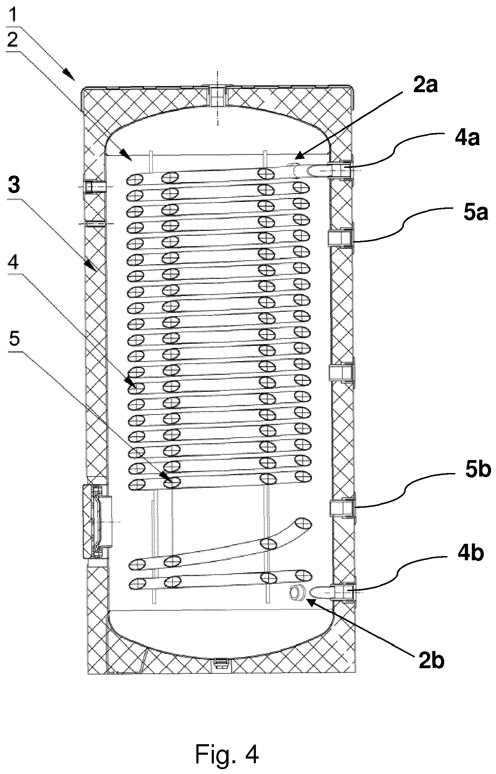

Figur 4 zeigt eine Ausführungsform eines Flüssigkeitsspeichers 1, welcher beispielsweise als Pufferspeicher betrieben werden kann, mit einem großen ersten helixförmig gewendelten rohrförmigen Wärmetauscher 4 mit geneigtem länglichen Querschnittsprofil, beispielsweise zur Versorgung mit einer Solarheizung. Ein koaxial in den ersten rohrförmigen Wärmetauscher 4 eingebrachter zweiter helixförmig gewendelter rohrförmiger Wärmetauscher 5 mit geneigtem länglichen Querschnittsprofil dient beispielsweise zum Anschluss an eine Brennstoffheizung.

Die Wärmetauscher sind zueinander wiederum derart angeordnet, d.h. im dargestellten Beispiel insbesondere durch geringen vertikalen Versatz der Windungen der Wärmetauscher 4 und 5 zueinander und der Ausrichtung der Neigungswinkel, dass eine über dem ersten rohrförmigen Wärmetauscher 4 aufsteigende Strömung S einer in dem Speicherbehälter erwärmten Flüssigkeit F auf den zweiten rohrförmigen Wärmetauscher 5 gerichtet wird, so dass dieser von der warmen Flüssigkeit S gezielt umspült wird, und die erwärmte Flüssigkeit, sei es durch den Wärmetauscher 5 und/oder den Wärmetauscher 6 erwärmt, ins Speicherinnere geführt wird.

Auch an dieser Stelle sei nochmals darauf hinwiesen, dass im Falle von mehreren Wärmetauschern, die jeweils separat an eine eigene Energiequelle angeschlossen sind, in der Regel jeweils nur ein Wärmetauscher zum Einsatz kommt, d.h. die meisten Energiequellen werden mit Absicht separat betrieben, quasi nach dem Motto, der günstigste Energieträger zuerst und wenn er nicht zur Verfügung steht, dann der nächste usw..

Für den Fall jedoch, dass bei mehreren Wärmetauschern, die jeweils separat an eine eigene Energiequelle angeschlossen sind, gleichzeitig auch mehrere Energiequellen angeschaltet sind, würde durch eine Anordnung nach Fig. 4 z.B. bei aufsteigender Strömung S einer in dem Speicherbehälter erwärmten Flüssigkeit F wiederum ein verbesserter Wärmeübergang auch zwischen Flüssigkeit und Wärmetauscher 5 erreicht werden, da die zuvor bereits durch den Wärmetauscher 4 erwärmte Flüssigkeit weiter durch den zweiten rohrförmigen Wärmetauscher 5 erwärmt wird.

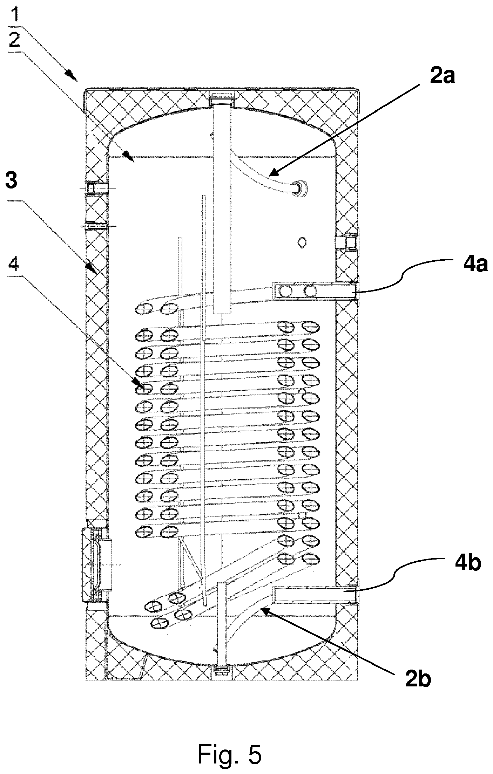

Figur 5 zeigt eine Ausführungsform eines Flüssigkeitsspeichers mit einem einzigen großen, doppelt gewundenen rohrförmigen Wärmetauscher 4 mit geneigtem länglichem Querschnittsprofil. Dieser Wärmetauscher 4 besitzt äußere und innere Windungen, die koaxial in die äußeren Windungen eingebracht sind. Die äußeren und inneren Windungen sind mit jeweils einem gemeinsamen ersten und einem zweiten Zu-/Ablauf 4a und 4b verbunden. Dieser Flüssigkeitsspeichers 1 eignet sich beispielsweise zum Einsatz als Brauchwasserspeicher, wobei das Brauchwasser in diesem Fall zweckmäßig an dem ersten und zweiten Zu-Ablauf 2a entnommen werden kann.

Die Ausstattung eines Flüssigkeitsspeichers mit einem doppelt gewickelten Wärmetauscher eignet sich insbesondere bei Kleinbehältern, bei denen aber eine grosse Oberfläche der Wärmetauscher gebraucht wird, z.B. auch bei einer Flüssigkeitsbeheizung durch eine Wärmepumpe, damit eine noch größere Oberfläche bei den Wärmetauschern erreicht wird.

Zweckmäßig wird ferner wiederum durch entsprechende Anordnung der Windungen eine über die äußeren Windungen des ersten rohrförmigen Wärmetauschers 4 aufsteigende Strömung S einer in dem Speicherbehälter erwärmten Flüssigkeit F auf die inneren Windungen des ersten rohrförmigen Wärmetauschers 4 gerichtet, so dass diese inneren Windungen von der warmen Flüssigkeit S gezielt umspült werden und der Wärmeübergang von der Flüssigkeit F wesentlich verbessert ist.

Bei den in den Figuren 3 bis 5 dargestellten Ausführungsformen von erfindungemäßen Flüssigkeitsspeichern 1 kann somit vorteilhaft der Neigungswinkel W wenigstens eines rohrförmigen Wärmetauschers oder der Neigungswinkel W von Teilabschnitten eines rohrförmigen Wärmetauschers auch kleiner, größer oder gleich dem Neigungswinkel W eines weiteren Wärmetauschers oder von weiteren Teilabschnitten eines rohrförmigen Wärmetauschers sein.

Die Figuren 6 bis 8 zeigen beispielhafte Ausführungsformen von Flüssigkeitsspeichern 1 mit unterschiedlichen rohrförmigen Wärmetauschern, teils mit einem geneigten länglichen Querschnittsprofil und teils mit einem herkömmlichen kreisförmigen Querschnittsprofil gemäß der Erfindung.

Beispielsweise können diese Flüssigkeitsspeicher 1 als Hygienespeicher ausgebildet sein. Zweckmäßig weist der Flüssigkeitsspeicher 1 dann alternativ oder zusätzlich einen als Edelstahlwellrohrwärmetauscher ausgebildeten Wärmetauscher auf, insbesondere mit einem kreisförmigen Querschnittsprofil. Ein solcher Edelstahlwellrohrwärmetauscher ist dann ebenfalls in den Speicherbehälter 2 montiert.

Üblicherweise müssen Hygienespeicher zweckmäßig keinen emaillierten ersten Speicherbehälter 2 aufweisen.

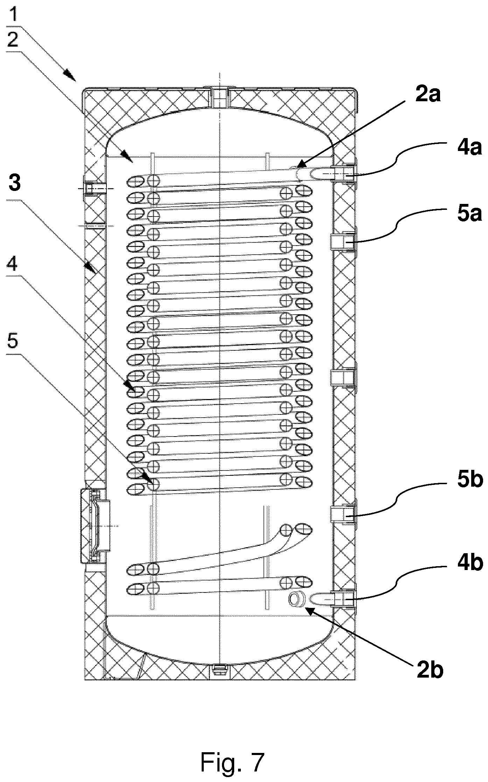

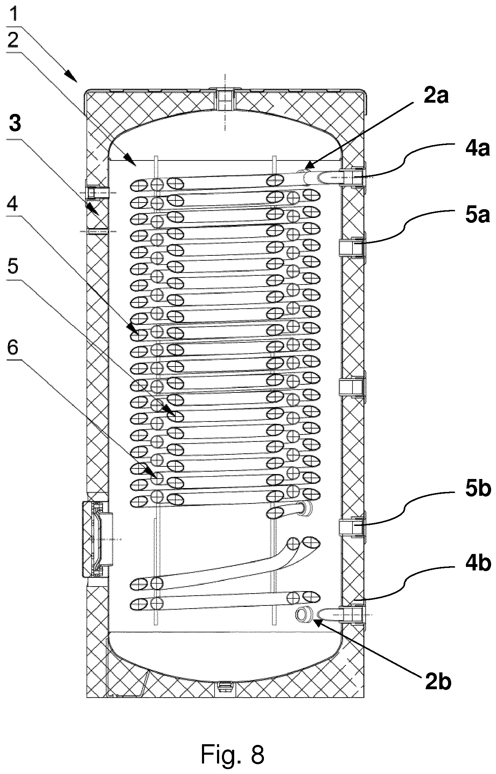

Insbesondere bei einer als Hygienespeicher ausgebildeten Ausführungsform eines Flüssigkeitsspeicher 1 kann jedoch zumindest ein zweiter rohrförmiger Wärmetauscher 5 (Fig. 7) und/oder ein dritter rohrförmiger Wärmetauscher 6 (Fig. 6, 8) ein herkömmliches kreisförmiges Querschnittsprofil aufweisen, zweckmäßig aus Edelstahlwellrohr sein und als Teil eines Entnahmekreislaufes zur Beheizung oder Kühlung von zu entnehmenden Brauchwasser dienen.

Selbstverständlich kann jedoch wenigstens ein solcher zweiter oder dritter rohrförmiger Wärmetauscher 5 (Fig. 7) bzw. 6 (Fig. 6, 8) zur Entnahme bzw. zur Nutzung von Brauchwasser auch aus einem Wellrohr mit einem beliebigen Querschnittsprofil geformt sein oder auch ein geneigtes längliches Querschnittsprofil gemäß der Erfindung besitzen. Durch die vergrößerte Oberfläche eines Wellrohres kann nochmals die Effizienz von Wärmetauschern gesteigert werden, die an einen Nutzkreislauf wie eine Brauchwasserentnahmestelle angeschlossen sind.

Dementsprechend weisen der zweite röhrförmige Wärmetauscher 5 gemäß der Figur 7 und der dritte röhrförmige Wärmetauscher 6 gemäß der Figur 6 in bevorzugten Ausführungen jeweils ein kreisförmiges Querschnittsprofil auf und sind vorzugsweise als Edelstahlwellerohrwärmetauscher mit einer vergrößerten äußeren Oberfläche zur Brauchwasserentnahme ausgebildet, wobei ansonsten die Merkmale, Funktionen und Vorteile der Ausführungsformen von Flüssigkeitsspeichern gemäß der Figuren 6 und 7 denen der Figuren 3 und 4 entsprechen.

Gemäß der Ausführungsform nach Figur 8 kann z.B. ein als Hygienespeicher ausgebildeter Flüssigkeitsspeicher 1 zweckmäßig auch drei koaxial ineinander angeordnete Wärmetauscher aufweisen. Beispielsweise einen ersten rohrförmigen Wärmetauscher 4, der einen äußeren geneigten Glattrohrwärmetauscher bildet, einen zweiten rohrförmigen Wärmetauscher 5, der einen inneren, z.B. ebenfalls geneigten Glattrohrwärmetauscher bildet, und einen dritten rohrförmigen Wärmetauscher 6, der dazwischen positioniert ist und z.B. als Edelstahlwellrohrwärmetauscher ausgebildet ist und keine Neigung aufweist.

Dieser Flüssigkeitsspeicher 1 eignet sich beispielsweise zum Einsatz als Pufferspeicher für Heizungswärme, wobei zweckmäßig eine Solarheizung an den äußeren, ersten röhrförmigen Wärmetauscher 4, eine Gasheizung an den inneren, zweiten Wärmetauscher 5 und insbesondere eine Brauchwasserentnahmestelle an den dazwischen positionierten dritten Wärmetauscher 6 angeschlossen werden kann.

Eine über die äußeren Windungen des ersten rohrförmigen Wärmetauschers 4 aufsteigende Strömung S einer in dem Speicherbehälter erwärmten Flüssigkeit F wird auf die äußere Oberfläche des dritten Wärmetauschers 6 gerichtet, so dass dieser von der warmen Flüssigkeit S gezielt umspült wird und der Wärmeübergang zwischen Flüssigkeit F und Wärmetauscher 6 wesentlich verbessert ist. In diesem Beispiel wird somit das im Wärmetauscher 6 als Teil eines Entnahmekreislaufs geführte Medium schneller erwärmt.

Des Weiteren wird eine über die die inneren Windungen des zweiten rohrförmigen Wärmetauschers 4 aufsteigende Strömung S einer in dem Speicherbehälter erwärmten Flüssigkeit F aufgrund eines zu dem Neigungswinkel W des ersten Wärmetauschers 4 gegenläufigen Neigungswinkels des zweiten Wärmetauschers 5 ebenfalls auf die äußere Oberfläche des Wärmetauschers 6 gerichtet, so dass dieser von dieser warmen Flüssigkeit S ebenfalls gezielt umspült wird. Somit ist der Wärmeübergang von der Flüssigkeit F noch weiter verbessert.

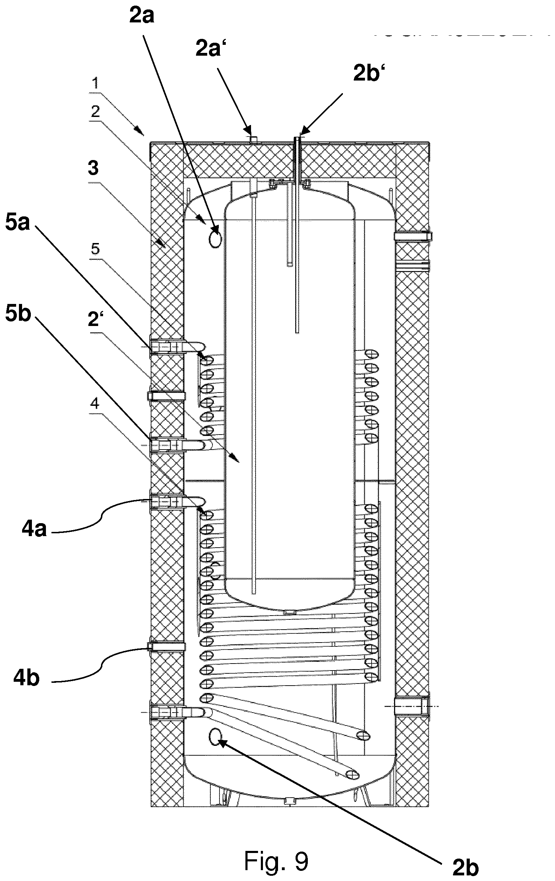

Bei einem als sogenannter Kombispeicher ausgebildeten Flüssigkeitsspeicher 1 gemäß Figur 9, das heißt einem "Tank-in-Tank-System", ist in der Regel zusätzlich ein zweiter Speicherbehälter 2' zur Aufbereitung von Frischwasser oder einer anderen Flüssigkeit in den ersten Speicherbehälter 2 eingebaut. Der Kombispeicher gemäß Figur 9 besteht somit aus zwei Speicherbehältern 2 und 2'.

Kombispeicher mit von innen in ersten Speicherbehältern 2 eingebautem zweiten, vorzugsweise von innen emaillierten zweiten Speicherbehältern 2', eignen sich insbesondere zur Aufbereitung von Frischwasser oder von anderen Flüssigkeiten mittels Kältemaschinen, elektrischer Beheizung, BHKW, Wärmepumpen, Heizkessel, Pellet- und Festbrennstoffkessel, wasserführenden Kaminöfen, Solar- oder Heizungsanlagen und weiteren Kreisläufen zur Heizungs- oder Trinkwassererwärmung oder Kühlung mit beispielsweise speziell positionierten, ovalen oder elliptischen Glattrohrwärmetauschern.

Gemäß Figur 9 weist ein Kombispeicher zweckmäßig einen unteren rohrförmigen Wärmetauscher 4 und einen oberen, zweiten rohrförmigen Wärmetauscher 5 auf, wobei der zweite Speicherbehälter 2' insbesondere koaxial zu den helixförmig ausgestalteten ersten und zweiten Wärmetauschern 4, 5 angeordnet ist.

Gemäß Figur 9 weisen erfindungsgemäß auch bei einem als Kombispeicher ausgestalteten Flüssigkeitsspeicher 1 bevorzugt alle, insbesondere als Glattrohrwärmetauscher, ausgebildeten rohrförmigen Wärmetauscher 4, 5 wiederum ein längliches, geneigtes Querschnittsprofil auf, welches zweckmäßig als ovales oder elliptisches Querschnittsprofil ausgebildet ist.

Ferner weisen die Längsachsen L der Querschnittsprofile aller Windungen dieser geneigten rohrförmigen Wärmetauscher 4 und 5 zweckmäßig einen Neigungswinkel W (wahlweise von 1 bis 359 Grad) zu dem als Basis angenommenen Ausgangspunkt der Horizontalen H von 0 Grad auf, so dass eine aufsteigende Strömung S einer in dem Speicherbehälter erwärmten Flüssigkeit F auf die äußere Oberfläche des zweiten Speicherbehälters 2'gerichtet ist und dieser von der warmen Flüssigkeit S gezielt umspült wird. Somit ist der Wärmeübergang von dem ersten und zweiten Wärmetauscher 4 und 5 auf den zweiten Speicherbehälter 2' wesentlich verbessert.

Gemäß Figur 9 ist ferner der zweite Wärmetauscher 5 zweckmäßig im mittleren Bereich des zweiten Speicherbehälters 2', und der erste Wärmetauscher 4 zweckmäßig im unteren Bereich, das heißt im Bodenbereich des zweiten Speicherbehälters 2' angeordnet.

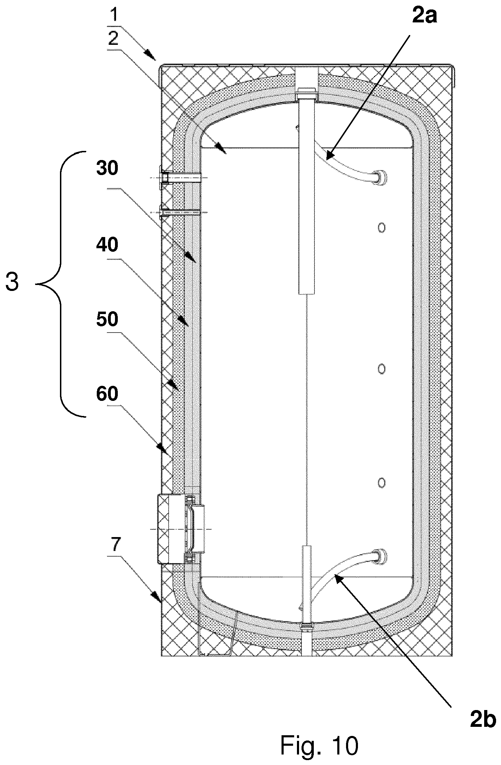

Die Figuren 10 bis 12 zeigen eine Ausführungsform eines nicht erfindungsgemäßen Flüssigkeitsspeichers 1 ohne Wärmetauscher, mit einem Speicherbehälter 2, der rundherum von einer nicht abnehmbaren oder von einer seitlich teilabnehmbaren Kombination von übereinander angeordneten Isolierungsschichten aus verschiedenen Materialien zur Kälte- und Wärmeisolierung 3 ummantelt ist.

Es sei darauf hingewiesen, dass auch eine auf den Figuren 10 bis 12 basierende Ausführungsform eines erfindungsgemäßen Flüssigkeitsspeichers wenigstens einen ersten rohrförmigen Wärmetauscher umfasst, der in den ersten Speicherbehälter 2 eingebracht ist und ein längliches Querschnittsprofil aufweist, insbesondere ein ovales oder elliptisches Querschnittsprofil, wobei die Längsachse des länglichen Querschnittsprofils des wenigstens einen rohrförmigen Wärmetauschers in einem Neigungswinkel zwischen 1° und 359°, insbesondere in einem Neigungswinkel zwischen +/-30° und +/-60°, zur Horizontalen ausgerichtet ist. Die zuvor in Bezug auf die Figuren 1 bis 9 getätigte Beschreibung mitsamt aller Merkmale findet somit im Rahmen der Erfindung auch in Bezug auf die auf den Figuren 10 bis 12 basierende Ausführungsform Anwendung, wobei aus Gründen den Überschaubarkeit diesbezüglich bei der nachfolgenden Beschreibung nicht nochmals detailliert darauf eingegangen wird.

Die Verwendung unterschiedlicher Materialien und deren Materialstärke bei Herstellung einer Schichtenisolierung für Flüssigkeitsspeicherbehälter, führt zu einer Minimierung der Kälte- bzw. Wärmeverluste, insbesondere auch aufgrund einer Reduzierung und/oder Stabilisierung der Temperaturgradienten an bzw. in den Außenbereichen der Speicherbehälter von Flüssigkeitsspeichern der vorbenannten Art. Das führt daher zu einer weiteren Steigerung der Effizienz von Flüssigkeitsspeichern, verbunden mit einer vorteilhaften Flexibilität bei Konstruktion, Herstellung und Dämmfähigkeit der Isolierung, sowie den Einsatzbereichen der Flüssigkeitsspeicher.

Durch flexible kautschukhaltige, synthetisch hergestellte Platten und mit pulverisierter mikroporöser Kieselsäure, Glasfasern oder anderen dafür geeigneten Substanzen gefüllte Vakuumtaschen, welche zweckmäßig von Hartschaum- oder Vliesisolierung umschäumt oder ummantelt sind und abschließend eine dekorative und schützende PVC oder Blechummantelung 7 haben, ist eine Kombination von Isolierungsschichten herstellbar, insbesondere auch mit einer Vakuum-Isolierungsschicht. Diese sind insbesondere für die vorbenannten Flüssigkeitsspeicher mit einem Wärmetauscher, jedoch auch für alle anderen Arten von Flüssigkeitsspeichern, die in verschiedenen Bereichen und mit unterschiedlichen Energieträgern arbeiten können, geeignet.

Bei Figur 10 ist detailliert eine Ausführungsform eines erfindungsgemäßen Flüssigkeitsspeichers 1 dargestellt, bei dem der erste Speicherbehälter 2 rundherum von einer nicht abnehmbaren Kombination von Isolierungsschichten (30, 40, 50, 60) ummantelt ist, wobei wenigstens eine erste, eine zweite und eine dritte Isolierungsschicht umfasst ist.

Eine erste Isolierungsschicht 30 besteht aus einer, insbesondere einseitig selbstklebenden, gas-/ wasserdampfdiffusionswiderständigen flexiblen Isolierung die fest an dem Speicherbehälter 2 fixiert, insbesondere angeklebt ist. Dies sind zweckmäßig kautschukhaltige, synthetisch hergestellte flexible Platten, zweckmäßig mit einer Wärmeleitfähigkeit von ca. 0,035 W·m-1·K-1. Die Verwendung einer ersten Isolierungsschicht 30 ermöglicht insbesondere die Vermeidung von Schwitzwasser- bzw. Kondensatbildung an der äußeren Oberfläche des Speicherbehälters 2 und in Folge somit auch von Rostbildung.

Eine zweite Isolierungsschicht 40 besteht aus einer, insbesondere einseitig selbstklebenden, gas-/wasserdampfdiffusionswiderständigen flexiblen Isolierung, die fest an einer dritten Isolierungsschicht 50, welche vorzugsweise eine Vakuumtaschenisolierung ist, fixiert, insbesondere angeklebt ist. Zweite Isolierungsschichten 40 sind zweckmäßig kautschukhaltige, synthetisch hergestellte flexible Platten, zweckmäßig mit einer Wärmeleitfähigkeit von ca. 0,035 W•m-1•K-1.

Die dritte Isolierungsschicht 50 ist zweckmäßig eine flexible gas- /wasserdampfdiffusionswiderständige Vakuumtaschenisolierung (Vakuumisolationspaneel), die fest an die zweite Isolierungsschicht 40 fixiert, insbesondere angeklebt ist.

Eine Vakuumtaschenisolierung besteht vorzugsweise aus beschichteter Verbundfolie und ist gefüllt mit porösem Kernmaterial wie pulverisierter mikroporöser Kieselsäure, Glasfasern oder anderen dafür geeignete Substanzen (Materialien). Die Vakuumtaschen sind evakuiert und verschlossen. Die Wärmeleitfähigkeit beträgt zweckmäßig ca. 0,004 W•m-1•K-1.

Die Fixierung einer zweiten Isolierungsschicht 40 auf der dritten Isolierungsschicht 50 ermöglicht den Verschluss, insbesondere den gasdichten Verschluss, der zum Speicherbehälter hin orientierten Oberfläche der dritten Isolierungsschicht 50. Diese neigt insbesondere bei einer Biegung um eine zylindrische Oberfläche zur Bildung von Falten- und/oder Hohlräumen, welche mittels der zweiten Isolierungsschicht 40 wirksam verschlossen werden können, so dass die Isolierungswirkung weiter verbessert ist.

Eine vierte Isolierungsschicht 60 kann zweckmäßig eine Polyurethan-Hartschaumisolierung sein. Die ersten drei Isolierungsschichten 30, 40, 50 können hiermit rundherum oder auch nur teilweise fest eingeschäumt sein bzw. gespritzt werden.

Eine Polyurethan-Hartschaumisolierung weist eine Wärmeleitfähigkeit von zweckmäßig ca. 0,026 W·m-1·K-1 auf. Alternativ oder ergänzend können die ersten drei Isolierungsschichten 30, 40, 50 auch mit einer Vliesisolierung ummantelt sein.

Für zusätzliche Befestigung, einen Schutz vor äußerlichen mechanischen Beschädigungen und/oder eine bessere Optik ist abschließend eine dekorative und/oder schützende Ummantelung 7, bevorzugt aus PVC oder aus einem Blech, auf der dritten oder vierten Isolierungsschicht 50, 60, zumindest teilweise, angebracht, so dass die Ummantelung 7 die erste, die zweite und die dritte Isolierungsschicht wenigstens teilweise umgibt.

Vorzugsweise ist bei einem erfindungsgemäßen Flüssigkeitsspeicher 1 die zweite Isolierungsschicht 40, die dritte Isolierungsschicht 50, die vierte Isolierungsschicht 60 und die Ummantelung 7 wenigstens teilweise, insbesondere zerstörungsfrei, abnehmbar.

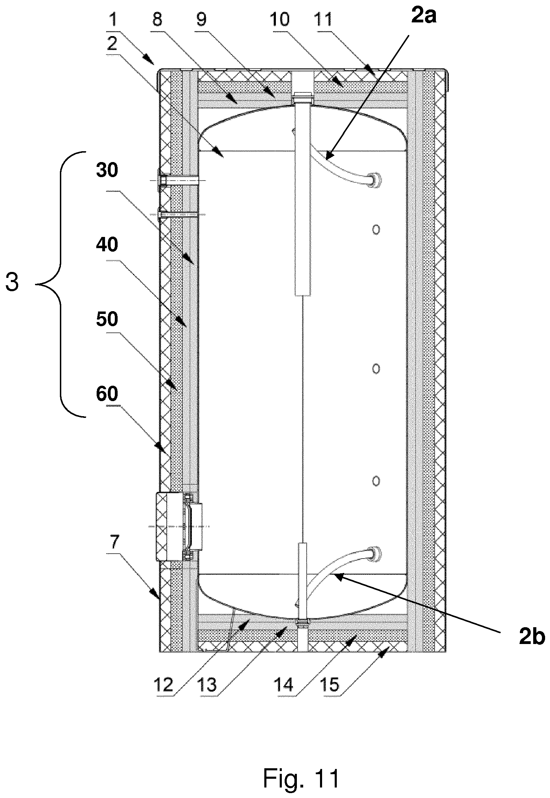

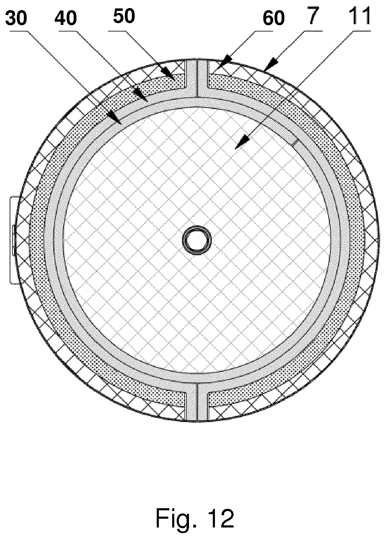

Die Figuren 11 und 12 zeigen detailliert eine derartige Ausführungsform eines Flüssigkeitsspeicher 1 gemäß der Erfindung, bei dem der erste Speicherbehälter 2 von einer teilabnehmbaren Kombination von Isolierungsschichten umgeben ist.

Bei einer derartigen Ausführungsform der Erfindung entspricht die Kombination der Isolierungsschichten 30, 40, 50, 60 grundsätzlich der Kombination der Isolierungsschichten 30, 40, 50, 60 wie bei einer Ausführungsform nach Figur 10.

Wie insbesondere jedoch gemäß Figur 12, einer Querschnitts-Draufsicht auf den Flüssigkeitsspeicher nach Figur 11, zu entnehmen ist, sind im Unterschied zur Ausführungsform gemäß Figur 10 diese Isolierungsschichten 40, 50 und 60 sowie die Ummantelung 7 zweckmäßig an den Seitenflächen des Speicherbehälters 2 komplett abnehmbar. Die Isolierungsschicht 30 ist hierbei bevorzugt weiterhin an den Seitenflächen des Speicherbehälters 2 fixiert. Die Isolierungsschichten 40, 50 und 60 sowie die Ummantelung 7 bilden somit zweckmäßig zwei abnehmbare Seitenteile eines Flüssigkeitsspeichers.

Wie ferner der Figur 11 zu entnehmen ist, sind hierzu diese seitlich angeordneten Isolierungsschichten 30, 40, 50 und 60 an den Seitenflächen des Speicherbehälters zweckmäßig separat zu einer zweiten, dritten, vierten Isolierungsschicht 8, 9, 10, 11, 12, 13, 14, 15 an der Kopfseite und an der Bodenseite des ersten Speicherbehälters 2 angeordnet. Die dauerhaft fixierte Isolierungsschicht 30 kann hierbei bevorzugt die an der Kopfseite und Bodenseite des ersten Speicherbehälters 2 angeordneten Isolierungsschicht 8, 9, 10, 11, 12, 13, 14, 15 seitlich mit umschließen und zusätzlich fixieren.

Die seitlich angebrachte zweite Isolierungsschicht 40 umgibt gemäß Figuren 11 und 12 somit beide mit der Isolierungsschicht 30 behafteten Seitenhälften des ersten Speicherbehälters 2 und ist somit zweckmäßig an jedem Seitenende nach außen bis zur Ummantelung 7 des Flüssigkeitsspeichers gebogen. Von unten nach oben endet die Isolierungsschicht 40 zweckmäßig abschließend mit den restlichen Isolierungsschichten (siehe Figur 11 - Ziffer 40). Somit können die beiden Seitenteile bei Bedarf von der ersten Isolierungsschicht 30, welche am Speicherbehälter fixiert bleibt, abgenommen werden.

Die am Kopf und am Boden des ersten Speicherbehälters 2 angebrachten zweiten Isolierungsschichten 9 und 13 sind vorzugsweise fest an Vakuumtaschenisolierungen 10 und 14 und an den inneren Seiten der ersten seitlichen Isolierungsschichten 30 eingeklebt und sind daher nicht abnehmbar.

Die zweiten Isolierungsschichten 9 und 13 sind vorzugsweise aus kautschukhaltigen, synthetisch hergestellten flexiblen Platten hergestellt und weisen eine Wärmeleitfähigkeit von zweckmäßig ca. 0,035 W•m-1•K-1 auf.

Die dritten Isolierungsschichten 10 und 14 bestehen vorzugsweise aus vier Bestandteilen, das heißt eine flexible gas-/wasserdampfdiffusionswiderständige Vakuumtaschenisolierung (Vakuumisolationspaneel), die fest an die zweite Isolierungsschicht 9 und 13 fixiert, insbesondere angeklebt ist.

Die Vakuumtaschen (Paneele) bestehen ferner bevorzugt aus beschichteter Verbundfolie die mit porösem Kernmaterial wie pulverisierter, mikroporöser Kieselsäure, Glasfasern oder anderen dafür geeignete Substanzen (Materialien) gefüllt sind. Die Vakuumtaschen sind evakuiert und verschlossen. Die Wärmeleitfähigkeit beträgt zweckmäßig ca. 0,004 W•m-1•K-1.

Die vierten Isolierungsschichten 11 und 15 sind zweckmäßig jeweils Polyurethan Hartschaumisolierungen. Diese sorgt für zusätzlichen Schutz vor äußerlichen mechanischen Beschädigungen, für eine bessere Isolierleistung und für Zusammenhalt. Die Wärmeleitfähigkeit beträgt zweckmäßig ca. 0,026 W•m-1•K-1.

Die Isolierungsschichten und die Vakuumtaschenisolierung 10, 14 an der Kopfseite und an der Bodenseite des Speicherbehälters sind vorzugsweise fest mit der Polyurethan-Hartschaumisolierung 11 und 15 eingeschäumt, weshalb die Speicherkopfisolierung und die Speicherbodenisolierung nicht abnehmbar ist.

Die beiden seitlichen Vakuumtaschenisolierungen 50 des ersten Speicherbehälters 2 und ein Teil der nach außen gebogenen Isolierungsschichten 40 sind vorzugsweise separat fest mit der Polyurethan-Hartschaumisolierung 60 eingeschäumt. Somit bleiben die beiden Kombinationen von Isolierungsschichten 40, 50 und 60 an den Seitenhälften des Speicherbehälters 2 abnehmbar, und zwar insbesondere zerstörungsfrei.

Dies ist ein wesentlicher Vorteil beim Transport des erfindungsgemäßen Flüssigkeitsspeichers durch enge Stellen wie beispielsweise Türen usw., weil die Erfindung somit eine besonders leistungsfähige Isolierung bereit stellt, insbesondere jedoch mit einer beliebig wählbaren Dicke und Gestalt.

Wahlweise kann die Polyurethan-Hartschaumisolierung 60 auch durch eine Vliesisolierung ersetzt werden, wobei für eine zusätzliche Befestigung, Schutz vor äußerlicher mechanischer Beschädigung und eine bessere Optik, abschließend eine abnehmbare dekorative und schützende PVC- oder Blechummantelung 7 angebracht ist.

Zur Montage der beiden Seitenhälften sind jegliche Arten von Befestigungsmitteln oder -Methoden möglich. Insbesondere sind jedoch Schrauben oder Klammern als Befestigungsmittel geeignet. Falzen oder Bördeln der Blech- oder einer PVC-Ummantelung 7 der beiden Seitenhälften oder eine Reißverschlussverbindung sind darüber hinaus weitere vorteilhafte Befestigungsmethoden.

### Bezugszeichen:

- 1: Flüssigkeitsspeicher

- 2: Erster Speicherbehälter
- 2a: Erster Zu-/Ablauf des ersten Speicherbehälters
- 2b: Zweiter Zu-/Ablauf des ersten Speicherbehälters

- 2': Zweiter Speicherbehälter
- 2a': Erster Zu-/Ablauf des zweiten Speicherbehälters
- 2b': Zweiter Zu-/Ablauf des zweiten Speicherbehälters

- 3: Isolierung

- 30: Erste Isolierungsschicht
- 40: Zweite Isolierungsschicht
- 50: Dritte Isolierungsschicht
- 60: Vierte Isolierungsschicht

- 7: Ummantelung

- 8: Erste Isolierungsschicht an der Kopfseite
- 9: Zweite Isolierungsschicht an der Kopfseite
- 10: Dritte Isolierungsschicht an der Kopfseite
- 11: Vierte Isolierungsschicht an der Kopfseite

- 12: Erste Isolierungsschicht an der Bodenseite
- 13: Zweite Isolierungsschicht an der Bodenseite
- 14: Dritte Isolierungsschicht an der Bodenseite
- 15: Vierte Isolierungsschicht an der Bodenseite
- 4: Erster rohrförmiger Wärmetauscher
- 4a: Erster Zu-/Ablauf des ersten Wärmetauschers
- 4b: Zweiter Zu-/Ablauf des ersten Wärmetauschers

- 5: Zweiter rohrförmiger Wärmetauscher
- 5a: Erster Zu-/Ablauf des zweiten Wärmetauschers
- 5b: Zweiter Zu-/Ablauf des zweiten Wärmetauschers

- 6: Dritter rohrförmiger Wärmetauscher
- 6a: Erster Zu-/Ablauf des dritten Wärmetauschers
- 6b: Zweiter Zu-/Ablauf des dritten Wärmetauschers

- F: Flüssigkeit
- L: Längsachse
- n, n', n'': Windung
- S, S': Strömung
- W: Neigungswinkel

## Patentansprüche

1. Flüssigkeitsspeicher (1) umfassend:
- einen ersten Speicherbehälter (2) zur Speicherung einer warmen oder einer kalten Flüssigkeit (F); und
- wenigstens einen ersten rohrförmigen Wärmetauscher (4), der in den ersten Speicherbehälter (2) eingebracht ist,
wobei der erste rohrförmige Wärmetauscher (4) helixförmig mit mehreren Windungen gewunden ist, insbesondere im Wesentlichen um die Hochachse des Speicherbehälters,
**dadurch gekennzeichnet, dass**
der erste rohrförmige Wärmetauscher (4) ein längliches Querschnittsprofil, insbesondere ein ovales oder elliptisches Querschnittsprofil, aufweist,
wobei die Längsachse (L) des länglichen Querschnittsprofils des ersten rohrförmigen Wärmetauschers (4) in einem Neigungswinkel (W) zwischen 1° und 359°, insbesondere in einem Neigungswinkel zwischen +/-30° und +/-60°, zur Horizontalen (H) ausgerichtet ist,
die Längsachse (L) des länglichen Querschnittsprofils des ersten rohrförmigen Wärmetauschers (4) in oder aus dem Zentrum des Speicherbehälters (2) gerichtet ist,
wobei
die Längsachse (L) des länglichen Querschnittsprofils des ersten rohrförmigen Wärmetauschers (4) derart ausgerichtet ist,
eine Flüssigkeits-Strömung von aufsteigender Flüssigkeit gezielt in das Zentrum des Speicherbehälters (2),
insbesondere auf einen ersten und/oder zweiten Zu-/Ablauf (2a, 2b) des Speicherbehälters (2), zu leiten,
und
eine Flüssigkeits-Strömung von absteigender Flüssigkeit gezielt aus dem Zentrum des Speicherbehälters (2), insbesondere auf einen ersten und/oder zweiten Zu-/Ablauf (2a, 2b) des Speicherbehälters (2), zu leiten.

2. Flüssigkeitsspeicher (1) nach Anspruch 1, wobei wenigstens ein zweiter und/oder ein dritter rohrförmiger Wärmetauscher (5, 6) in den ersten Speicherbehälter (2) eingebracht ist, der ein längliches Querschnittsprofil, insbesondere ein ovales oder elliptisches Querschnittsprofil, aufweist, wobei die Längsachse (L) des länglichen Querschnittsprofils des wenigstens eines zweiten und/oder dritten Wärmetauschers (5, 6) in einem Neigungswinkel (W) zwischen 1° und 359°, insbesondere in einem Neigungswinkel zwischen +/-30° und +/-60°, zur Horizontalen (H) ausgerichtet ist/sind.

3. Flüssigkeitsspeicher (1) nach Anspruch 2, wobei wenigstens der zweite und/oder dritte rohrförmige Wärmetauscher (5, 6) helixförmig gewunden ist, insbesondere im Wesentlichen um die Hochachse des Speicherbehälters.

4. Flüssigkeitsspeicher (1) nach einem der Ansprüche 1 bis 3, wobei wenigstens ein rohrförmiger Wärmetauscher (4, 5, 6) mit länglichem Querschnittsprofil koaxial innerhalb eines anderen, im Flüssigkeitsspeicher angeordneten Wärmetauscher und/oder um einen anderen, im Flüssigkeitsspeicher angeordneten Wärmetauscher herum eingebracht ist.

5. Flüssigkeitsspeicher (1) nach einem der Ansprüche 1 bis 4, wobei der Neigungswinkel (W) wenigstens eines dieser Wärmetauscher derart ausgerichtet ist, dass eine insbesondere auf- oder absteigende Strömung (S, S') der Flüssigkeit (F) in dem Speicherbehälter auf wenigstens einen anderen, im Flüssigkeitsspeicher angeordneten Wärmetauscher (4, 5, 6) gerichtet ist.

6. Flüssigkeitsspeicher (1) nach einem der Ansprüche 1 bis 5, wobei der Neigungswinkel (W) entlang wenigstens einem der rohrförmigen Wärmetauscher (4, 5, 6) mit länglichem Querschnittsprofil im Wesentlichen konstant ist.

7. Flüssigkeitsspeicher (1) nach einem der Ansprüche 1 bis 6, umfassend:
- eine Isolierung (3), umfassend:
- eine erste Isolierungsschicht (30), die an der Außenseite des Speicherbehälters (2) fixiert, insbesondere angeklebt ist;
- eine zweite Isolierungsschicht (40), die an einer dritten Isolierungsschicht (50), welche insbesondere eine Vakuumtaschenisolierung ist, fixiert, insbesondere angeklebt ist, wobei die zweite Isolierungsschicht (40) zur ersten Isolierungsschicht (30) hin orientiert ist und die die zweite Isolierungsschicht (40) und die dritte Isolierungsschicht (50) den Speicherbehälter (2) wenigstens teilweise umgeben.

8. Flüssigkeitsspeicher (1) nach Anspruch 7, wobei eine vierte Isolierungsschicht (60) und eine Ummantelung (7), insbesondere eine PVC- oder Blechummantelung, die erste, die zweite und die dritte Isolierungsschicht (30, 40, 50) wenigstens teilweise umgeben.

9. Flüssigkeitsspeicher (1) nach einem der Ansprüche 7 bis 8, wobei die vierte Isolierungsschicht (60) eine Hartschaumisolierung, insbesondere eine gespritzte Polyurethan-Hartschaumisolierung ist und/oder zumindest die zweite, die dritte und die vierte Isolierungsschicht (40, 50, 60) und die Ummantelung (7) an den Seitenflächen des Speicherbehälters separat zu einer zweiten, dritten, vierten Isolierungsschicht (9, 10, 11, 13, 14, 15) und/oder einer Ummantelung an der Kopfseite und/oder der Bodenseite des Speicherbehälters (2) angeordnet sind.

10. Flüssigkeitsspeicher (1) nach einem der Ansprüche 7 bis 9, wobei die zweite Isolierungsschicht (40), die dritte Isolierungsschicht (50), die vierte Isolierungsschicht (60) und die Ummantelung (7) wenigstens teilweise, insbesondere an den Seitenflächen des Speicherbehälters (2), von der ersten Isolierungsschicht (30), insbesondere zerstörungsfrei, abnehmbar ist.

11. Flüssigkeitsspeicher (1) nach einem der Ansprüche 7 bis 10, welcher wenigstens einen weiteren rohrförmigen Wärmetauscher (4) umfasst, der ein längliches Querschnittsprofil, insbesondere ein ovales oder ein elliptisches Querschnittsprofil, oder ein kreisförmiges Profil aufweist.

## Claims

1. A liquid storage (1) comprising:
- a first storage container (2) for storing a hot or a cold liquid (F); and
- at least one first tubular heat exchanger (4) which is installed in the first storage container (2);
wherein the first tubular heat exchanger (4) is wound helically, with a plurality of turns, in particular substantially around the vertical axis of the storage container;
**characterized in that**
the first tubular heat exchanger (4) has an elongated cross-sectional profile, in particular an oval or elliptical cross-sectional profile;
wherein the longitudinal axis (L) of the elongated cross-sectional profile of the first tubular heat exchanger (4) is aligned at an inclination angle (W) between 1° and 359° relative to the horizontal (H), in particular at an inclination angle between +/- 30° and +/- 60°;
the longitudinal axis (L) of the elongated cross-sectional profile of the first tubular heat exchanger (4) is directed into or out of the centre of the storage container (2); wherein
the longitudinal axis (L) of the elongated cross-sectional profile of the first tubular heat exchanger (4) is oriented so that
a liquid flow of ascending liquid is specifically directed into the centre of the storage container (2), in particular towards a first and/or second inlet/outlet (2a, 2b) of the storage container (2), and
a liquid flow of descending liquid is specifically directed out of the centre of the storage container (2), in particular towards a first and/or second inlet/outlet (2a, 2b) of the storage container (2).

2. The liquid storage (1) according to claim 1, wherein at least a second and/or a third tubular heat exchanger (5, 6) is installed in the first storage container (2), which has an elongated cross-sectional profile, in particular an oval or elliptical cross-sectional profile, wherein the longitudinal axis (L) of the elongated cross-sectional profile of the at least one second and/or third heat exchanger (5, 6) is aligned at an inclination angle (W) between 1° and 359° relative to the horizontal (H), in particular at an inclination angle between +/- 30° and +/- 60°.

3. The liquid storage (1) according to claim 2, wherein at least the second and/or third tubular heat exchanger (5, 6) is wound helically, in particular substantially around the vertical axis of the storage container.

4. The liquid storage (1) according to any one of claims 1 to 3, wherein at least one tubular heat exchanger (4, 5, 6) with an elongated cross-sectional profile is installed coaxially to and inside another heat exchanger arranged in the liquid storage, and/or is installed around another heat exchanger arranged in the liquid storage.

5. The liquid storage (1) according to any one of claims 1 to 4, wherein the inclination angle (W) of at least one of said heat exchangers is aligned such that in particular an ascending or descending flow (S, S') of the liquid (F) contained in the storage container is directed towards at least one other heat exchanger (4, 5, 6) arranged in the liquid storage.

6. The liquid storage (1) according to any one of claims 1 to 5, wherein along at least one of the tubular heat exchangers (4, 5, 6) having an elongated cross-sectional profile, the inclination angle (W) is substantially consistent.

7. The liquid storage (1) according to any one of claims 1 to 6, comprising:
- an insulation (3), including:
- a first insulating layer (30) which is fixed, in particular glued, to the outer surface of the storage container (2);
- a second insulating layer (40) which is fixed, in particular glued, to a third insulating layer (50) which in particular constitutes a vacuum bag insulation,
wherein the second insulating layer (40) faces the first insulating layer (30), and wherein the second insulating layer (40) and the third insulating layer (50) surround the storage container (2), at least partially.

8. The liquid storage (1) according to claim 7, wherein the first, second, and third insulating layers (30, 40, 50) are at least partially surrounded by a fourth insulating layer (60) and a jacket (7), in particular a PVC or sheet metal jacket.

9. The liquid storage (1) according to any one of claims 7 to 8, wherein the fourth insulating layer (60) is a hard foam insulation, in particular a polyurethane spray hard foam insulation, and/or wherein at least the second, third, and fourth insulating layers (40, 50, 60) and the jacket (7) on the lateral surfaces of the storage container are arranged separately from second, third, fourth insulating layers (9, 10, 11, 13, 14, 15) and/or a jacket on the top side and/or on the bottom side of the storage container (2).

10. The liquid storage (1) according to any one of claims 7 to 9, wherein the second insulating layer (40), the third insulating layer (50), the fourth insulating layer (60), and the jacket (7) are removable from the first insulating layer (30), at least partially, in particular on the lateral surfaces of the storage container (2), in particular non-destructively.

11. The liquid storage (1) according to any one of claims 7 to 10, comprising at least one further tubular heat exchanger (4) that has an elongated cross-sectional profile, in particular an oval or an elliptical cross-sectional profile, or a circular profile.

## Revendications

1. Réservoir à liquide (1), comprenant :
- un premier récipient de stockage (2) pour le stockage d'un liquide (F) chaud ou froid ; et
- au moins un premier échangeur de chaleur tubulaire (4), monté dans le premier récipient de stockage (2),
dans lequel le premier échangeur de chaleur tubulaire (4) est enroulé hélicoïdalement avec plusieurs spires, en particulier sensiblement autour de l'axe vertical du récipient de stockage,
**caractérisé en ce que** :
le premier échangeur de chaleur tubulaire (4) présente un profil de section transversale oblong, en particulier un profil de section transversale ovale ou elliptique,
dans lequel l'axe longitudinal (L) du profil de section transversale oblong du premier échangeur de chaleur tubulaire (4) est incliné suivant un angle d'inclinaison (W) compris entre 1° et 359°, en particulier suivant un angle d'inclinaison compris entre +/-30° et +/-60° par rapport à l'horizontale (H),
l'axe longitudinal (L) du profil de section transversale oblong du premier échangeur de chaleur tubulaire (4) est aligné sur le centre du récipient de stockage (2), ou extérieurement à celui-ci,
dans lequel :
l'axe longitudinal (L) du profil de section transversale oblong du premier échangeur de chaleur tubulaire (4) est aligné de manière
à conduire de manière ciblée un flux de liquide ascendant vers le centre du récipient de stockage (2), en particulier vers une première et/ou une deuxième admission/ évacuation (2a, 2b) du récipient de stockage (2), et
à conduire de manière ciblée un flux de liquide descendant hors du centre du récipient de stockage (2), en particulier vers une première et/ou une deuxième admission/ évacuation (2a, 2b) du récipient de stockage (2).

2. Réservoir à liquide (1) selon la revendication 1, dans lequel au moins un deuxième et/ou un troisième échangeurs de chaleur tubulaires (5, 6) sont montés dans le premier récipient de stockage (2) et présentent un profil de section transversale oblong, en particulier un profil de section transversale ovale ou elliptique, dans lequel l'axe longitudinal (L) du profil de section transversale oblong desdits au moins un deuxième et/ou troisième échangeurs de chaleur (5, 6) est incliné suivant un angle d'inclinaison (W) compris entre 1° et 359°, en particulier suivant un angle d'inclinaison compris entre +/-30° et +/-60° par rapport à l'horizontale (H).

3. Réservoir à liquide (1) selon la revendication 2, dans lequel au moins le deuxième et/ou troisième échangeur de chaleur (5, 6) est enroulé hélicoïdalement avec plusieurs spires, en particulier sensiblement autour de l'axe vertical du récipient de stockage.

4. Réservoir à liquide (1) selon l'une des revendications 1 à 3, dans lequel au moins un échangeur de chaleur tubulaire (4, 5, 6) à profil de section transversale oblong est monté coaxialement à l'intérieur d'un autre échangeur de chaleur disposé dans le réservoir à liquide et/ou autour d'un autre échangeur de chaleur disposé dans le réservoir à liquide.

5. Réservoir à liquide (1) selon l'une des revendications 1 à 4, dans lequel l'angle d'inclinaison (W) d'au moins un desdits échangeurs de chaleur est tel qu'un flux en particulier ascendant ou descendant (S, S') du liquide (F) dans le récipient de stockage est dirigé vers au moins un autre échangeur de chaleur (4, 5, 6) disposé dans le réservoir à liquide.

6. Réservoir à liquide (1) selon l'une des revendications 1 à 5, dans lequel l'angle d'inclinaison (W) le long d'au moins un des échangeurs de chaleur tubulaires (4, 5, 6) à profil de section transversale oblong est sensiblement constant.

7. Réservoir à liquide (1) selon l'une des revendications 1 à 6, comprenant :
- une isolation (3), comprenant :
- une première couche isolante (30) fixée, en particulier collée, sur la face extérieure du récipient de stockage (2) ;
- une deuxième couche isolante (40) fixée, en particulier collée, sur une troisième couche isolante (50), laquelle est en particulier une couche d'isolation par vide, la deuxième couche isolante (40) étant orientée vers la première couche isolante (30) et la deuxième couche isolante (40) ainsi que la troisième couche isolante (50) entourant au moins en partie le récipient de stockage (2).

8. Réservoir à liquide (1) selon la revendication 7, dans lequel une quatrième couche isolante (60) et une enveloppe (7), en particulier une enveloppe en PVC ou en tôle, entourent au moins en partie la première, la deuxième et la troisième couches isolantes (30, 40, 50).

9. Réservoir à liquide (1) selon l'une des revendications 7 et 8, dans lequel la quatrième couche isolante (60) est une isolation en mousse dure, en particulier une isolation en mousse dure de polyuréthane injectée et/ou au moins la deuxième, la troisième et la quatrième couches isolantes (40, 50, 60) et l'enveloppe (7) sont disposées sur les surfaces latérales du récipient de stockage séparément d'une deuxième, d'une troisième et d'une quatrième couche isolante (9, 10, 11, 13, 14, 15) et/ou d'une enveloppe sur la face de sommet et/ou la face de fond du récipient de stockage (2).

10. Réservoir à liquide (1) selon l'une des revendications 7 à 9, dans lequel la deuxième couche isolante (40), la troisième couche isolante (50), la quatrième couche isolante (60) et l'enveloppe (7) sont au moins partiellement amovibles, en particulier sur les surfaces latérales du récipient de stockage (2), de la première couche d'isolation (30), en particulier de manière non destructive.

11. Réservoir à liquide (1) selon l'une des revendications 7 à 10, comprenant au moins un autre échangeur de chaleur tubulaire (4), lequel présente un profil de section transversale oblong, en particulier un profil de section transversale ovale ou elliptique, ou un profil circulaire.
